# EUROPEAN PATENT SPECIFICATION

(11) **EP 3 769 653 B1**
(45) Date of publication and mention of the grant of the patent: **21.12.2022**
(21) Application number: 19770526.2
(22) Date of filing: 20.03.2019
(51) Int. Cl.: A47K 13/26

(54) **TOILET COVER PLATE HINGE SEAT EASY TO DISASSEMBLE AND ASSEMBLE**
LEICHT ZERLEGBARER UND ZUSAMMENSETZBARER TOILETTENDECKEL-SCHARNIERSITZ
SOCLE DE CHARNIÈRE DE COUVERCLE DE TOILETTES FACILE À MONTER ET À DÉMONTER

(30) Priority: 21.03.2018 CN 201820389155 U
(43) Date of publication of application: 27.01.2021
(73) Proprietor: Geberit International AG, 8645 Jona (CH)
(72) Inventor: GONG, Binhua, Xiamen, Fujian 361000 (CN); CHEN, Yibin, Xiamen, Fujian 361000 (CN)
(74) Representative: Frischknecht, Harry Ralph
(86) International application number: PCT/CN2019/078830
(87) International publication number: WO 2019/179455

(56) References cited:
- CN-A- 103 735 217
- CN-A- 106 725 061
- CN-U- 201 668 345
- CN-U- 202 055 665
- CN-U- 203 302 975
- CN-U- 204 181 551
- CN-U- 205 689 562
- US-A1- 2011 296 600
- US-A1- 2013 198 942

## Description

### Technical Field

The invention relates to a hinge seat for mounting a toilet seat cover plate, in particular to a mounting structure that is easy to disassemble and assemble.

### Background

A toilet cover plate needs to be connected with a ceramic body, so that the toilet cover plate is installed on the upper surface of the rear half of the ceramic body. Generally, the connection between the toilet cover plate and the ceramic body is mainly provided with a hinge seat on the ceramic body, the ceramic body only has a mounting hole, the upper end of the mounting hole is provided with a hinge seat, the seat body is provided with a bolt hole, and a bolt penetrates down from a bolt hole to the mounting hole of the ceramic, and a gasket and a nut are screwed onto the bolt from the lower surface of the ceramic body. Since the ceramic body is usually installed near a wall, the space under the mounting hole is narrow, so it is inconvenient to screw the nut by hand or using a wrench, which is time-consuming and laborious. Chinese patent CN206342414U discloses a toilet cover mounting mechanism, comprising a hinge seat, a threaded connecting rod and an elastic expandable sleeve; the threaded connecting rod is connected with the hinge seat directly; the elastic expandable sleeve is sleeved on the threaded connecting rod and is configured to be arranged in an mounting hole formed in the toilet base; the mounting mechanism further comprises: a first element for sleeve expansion sleeved on the threaded connecting rod and located on the side of the elastic expandable sleeve close to the hinge seat; a second element for sleeve expansion sleeved on the threaded connecting rod and located on the side of the elastic expandable sleeve away from the hinge seat; wherein, at least a part of the first element for sleeve expansion and the second element for sleeve expansion extends into the elastic expandable sleeve; under the joint action of the first element for sleeve expansion and the second element for sleeve expansion, the elastic expandable sleeve is radially expanded as a whole to be locked in the mounting hole of the toilet base. The mounting mechanism can be installed by expandable sleeve, which has complex structure and is not easy to disassemble. Chinese patent CN106725061A discloses a toilet cover plate hinge seat according to the preamble of claim 1.

### Summary

The invention provides a mounting structure of a toilet cover plate, which overcomes the deficiencies of mounting structure of the toilet cover plate in the prior art.

The technical solution adopted by the present invention to solve the technical problems thereof is:
a toilet cover plate hinge seat according to claim 1.

In an embodiment, the fixing frame has a limiting portion for cooperating with the fastener to position the fastener in the first state; the fastener has a fastener limiting portion corresponding to a fixing frame limiting portion; the fastener has the first state and a second state; the nut is located in a non-center of gravity position of the fastener and forms a connection relationship of synchronous motion with the fastener; the fastener moves with the nut, switches to the second state after disengagement of the fastener limiting portion from the fixing frame limiting portion, and can abut a lower end face of a ceramic mounting hole in the second state. Compared with the prior art, the technical solution has the following advantages:
1. During the mounting, the mounting assemblies, except for the bolts, are fixed into the mounting holes of the ceramic body, and then the bolts are inserted and rotated to complete the mounting. Since these operations are all done on the upper surface of the ceramic body, there is no need to operate in the narrow space behind the ceramic body, which greatly reduces the difficulty of mounting and has good industrial applicability.
2. The nut can be axially movable and assembled in the fixing frame, and is located at the non-center of gravity position of the fastener, and forms a connection relationship of synchronous motion with the fastener; the fastener is assembled on the fixing frame and is cooperated with the fixing frame limiting portion, and has a fastener limiting portion corresponding to a fixing frame limiting portion ; in this way, the nut which can move up and down make the fastener vertical or automatically flip to horizontal.

### Brief Description of the Drawings

The present invention will be further described below with reference to the drawings and embodiments.
Fig. 1 is an exploded structural schematic view of the toilet cover plate mounting structure of an embodiment.
Fig. 2 shows the mounting structure of the toilet cover plate of the embodiment in the first state, that is, the initial state.
Fig. 3 is a cross-sectional view in the direction of A-A in Fig. 2.
Fig. 4 shows the mounting structure of the toilet cover plate of the embodiment in the second state, that is, half-flap state.
Fig. 5 shows the mounting structure of the toilet cover plate of the embodiment in the third state, that is, the locked state.
   -bolt; 2-fixing frame; 3-fastener; 4-nut; 5-ceramic; 6-C-ring.

### Detailed Description

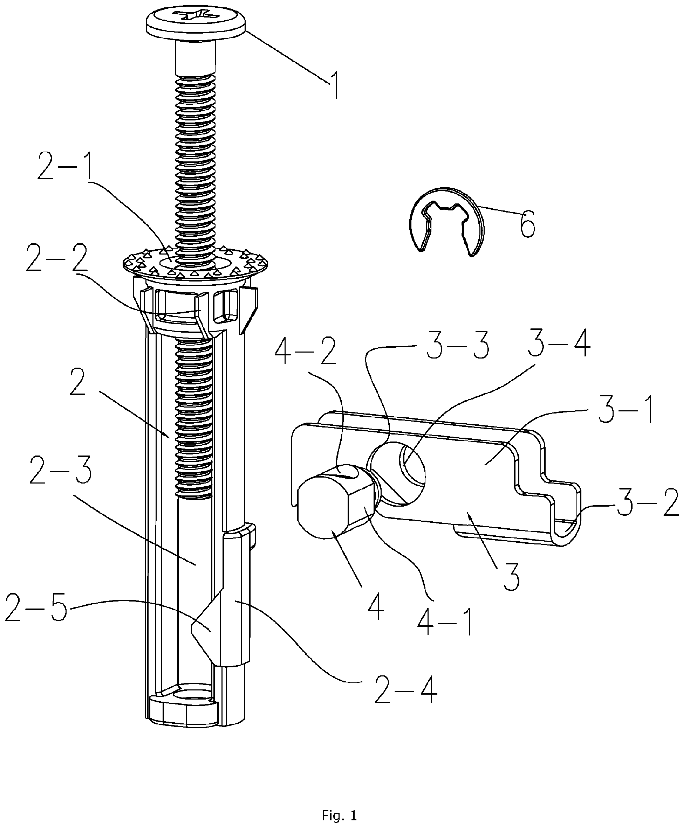

Referring to Fig. 1, a hinge seat for mounting a toilet cover plate according to the present invention comprises a hinge seat for connecting the toilet cover plate (not shown in the figure), and mounting assemblies for fixing the seat body on the toilet ceramic body, the mounting assemblies comprises a bolt 1, a fixing frame 2, a fastener 3 and a nut 4.

In the present embodiment, the fixing frame 2 has a cylindrical shape having a guide groove at the top end and the symmetry plane, and the bolt 1 is inserted into the fixing frame 2 from the top end opening 2-1. The side ring near the top end is provided with a plurality of axial ribs 2-2 for reinforcing the friction between the fixing frame 2 and the side wall of the mounting hole of the ceramic body 5, so that the fixing frame 22 is easy to be in a non-rotating state and is centered in the mounting hole during mounting. Side openings 2-3 are provided on opposite sides of the fixing frame 2 respectively. A limiting frame 2-4 is provided on the lower side of the fixing frame, and the limiting frame 2-4 is respectively provided with a triangular limiting protrusion 2-5 at the openings 2-3 on both sides.

The nut 4 has a cylindrical shape, and the internal threaded hole 4-2 for inserting the bolt therein is arranged radially, and its two sides are respectively flattened into plane 4-1. In this way, after the nut 4 is inserted from the side opening 2-3 of the fixing frame 2, it can be in a non-rotating state, and can only move up and down but cannot rotate.

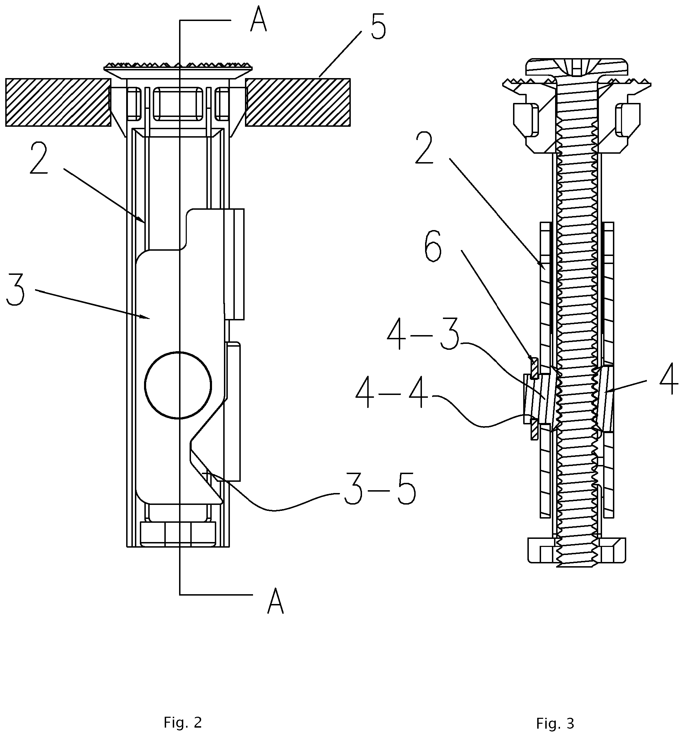

The fastener 3 comprises two parallel side plates 3-1 and a U-shaped connecting plate 3-2 between the two side plates 3-1. The length of the U-shaped connecting plate 3-2 is less than that of the two side plates 3-1, so that the two side plates can be clamped on both sides of the fixing frame 2. The two side plates are respectively provided with a front insertion hole 3-3 and a rear insertion hole 3-4 at the non-center of gravity position, and the two ends of the nut 2 are inserted into the front and rear insertion holes respectively, and the fastener 3 can take the nut 2 as an axis and rotate about it. The lower side of the two side plates 3-1 (see Fig. 2, the right side) is provided with a triangular limiting groove 3-5. When the limiting groove 3-5 of the fastener 3 is located at the triangular limiting protrusion 2-5 of the fixing frame 2, the fastener 3 is in the upright state, that is, the first state. In the present embodiment, the limiting part of the fixing frame is a triangular protrusion, and the limiting part of the fastener 3 is a triangular groove 3-5. In other embodiments, other matching shapes may also be used to enable the fastener to be in an upright state. Other matching shapes comprise such as circular grooves and semicircular or elliptical protrusion.

In this embodiment, among the two insertion holes on the side plate of the fastener 3, the front insertion hole 3-3 is larger and the rear insertion hole 3-4 is smaller. Correspondingly, the rearward extension of the nut 4 is provided with an extension end 4-3 with a reduced diameter, and a step is formed therebetween, so that the nut can be restricted by the step after being inserted into the side plates from front to back. The part where the extension end protrudes from the side plates is provided with a clamping groove 4-4, and a C-ring 6 is clamped in the clamping groove 4-4. In this way, the nut is restricted by the step and the C-ring, and can only rotate relative to the side plate and cannot be detached forward or backward.

The mounting method according to the present invention is as follows:
Referring to Fig. 2 and Fig. 3, the two side plates of the fastener 3 are laterally clamped on the outer side of the upper middle portion of the fixing frame 2, so that the front and rear insertion holes of the two side plates respectively face the two openings of the fixing frame 2, and then the nut 4 is inserted into the internal threaded hole 4-2 of the fastener 3, and is clamped and positioned by the C-ring 6, so that the fastener 3 and the nut 4 can only move up and down along the fixing frame 2 and cannot be detached. Move the nut 4 or the fastener downward, and then flip the fastener 3, so that the limiting groove 3-5 of the fastener 3 and the triangular limit protrusion 2-5 of the fixing frame 2 match each other, and the fastener 3 is in the upright state, that is, the first state.

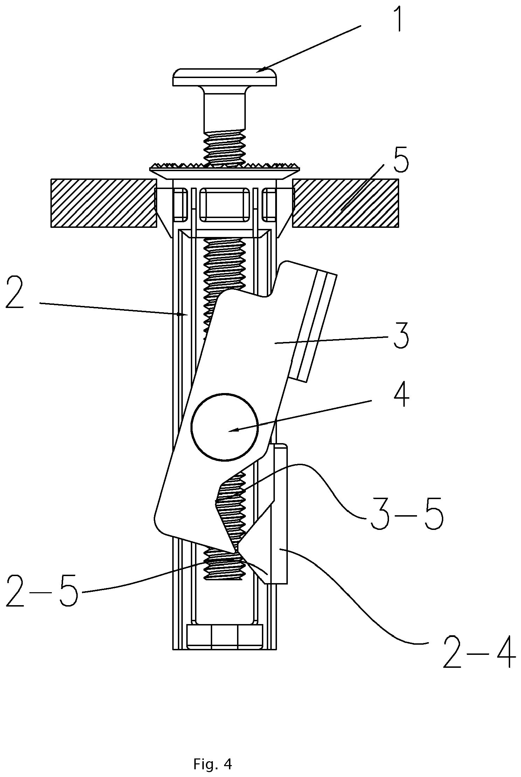

During the mounting, firstly, the fixing frame 2 and the fastener 3 in the upright state penetrate down through the seat mounting hole on the ceramic body of the toilet, and then the bolt 1 is inserted into the fixing frame 3 after passing through the fixing hole on the seat body, and the bolt 1 is turned to screw match with the nut 4 inside the fixing frame 2 to drive the nut 4 to move upward gradually, so that the fastener 3 is also driven to move upward at the same time. In this process, the limiting groove 3-5 of the fastener 3 is gradually separated from the triangular limiting protrusion 2-5 of the fixing frame 2. Referring to Fig. 4, when reaching a certain height, since the nut is at the non-center of gravity position of the fastener, the fastener 3 will automatically tilt under gravity.

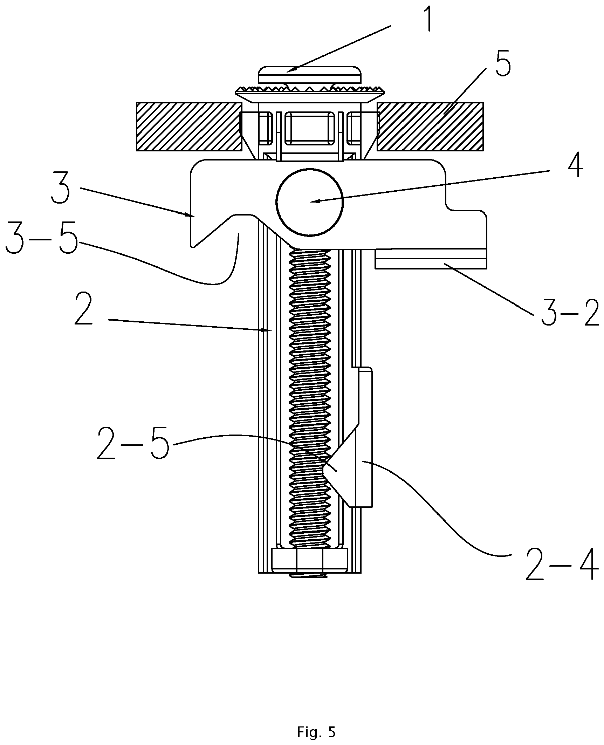

As the nut 4 continues to move upward and drive the fastener 3 until the fastener 3 is pushed by the nut 4 until it has stuck on the lower end surface of the hinge seat mounting hole, the fastener 3 is in a horizontal state, as shown in Fig. 5. At this time, the nut 2 is in the locked state, and the cover plate seat is installed.

The disassembly process is the opposite of the above.

The above is only the specific implementation of the invention, but the design concept of the invention is not limited to this, and any insubstantial modification to the present invention using this concept and falling within the scope of the appended claims should belong to the protection scope of the present invention.

### Industrial applicability

The invention discloses a toilet cover plate hinge seat easy to disassemble and assemble, comprising a seat body and mounting assemblies for fixing the seat body. The mounting assemblies comprises a bolt, a nut, a fixing frame and a fastener, wherein the fixing frame having a guide groove is arranged below or in a seat mounting hole on the ceramic body of the toilet, and is sleeved outside the bolt.

The nut matches with the bolt, and extends radially to form aninsertion pin. The fastener is gripped on the outer side of the fixing frame and is provided with an insertion hole into which the nut is inserted, and the nut passes through the insertion hole of the fastener and an opening of the fixing frame. A screw hole of the nut is correspondingly positioned at a lower threading position of the bolt, the bolt passes through the ceramic body and threadedly connects to the nut. The fixing frame may be provided with a limiting portion for cooperating with the fastener to position the fastener in the first state. The fastener may have a fastener limiting portion corresponding to a fixing frame limiting portion . The fastener may have the first state and a second state. The nut may be located at a non-center of gravity position of the fastener and forms a connection relationship of synchronous motion with the fastener. The fastener may move with the nut, switch to the second state after disengagement of the fastener limiting portion from the fixing frame limiting portion, and abut a lower end face of a ceramic mounting hole in the second state. Compared with the prior art, the technical solution has the following advantages. During the mounting, only the mounting assemblies, except for the bolts, are fixed into the mounting holes of the ceramic body, and then the bolts are inserted and the bolts are rotated to complete the mounting. Since they are all done on the upper surface of the ceramic body, there is no need to operate in the narrow space behind the ceramic body, which greatly reduces the difficulty of mounting and has good industrial applicability.

## Claims

1. A toilet cover plate hinge seat easy to disassemble and assemble, comprising a seat body, mounting assemblies for fixing the seat body to a toilet ceramic body (5) each of the mounting assemblies comprising a bolt (1), a nut (4), a fixing frame (2) and a fastener (3), wherein the fixing frame is provided below or in a support mounting hole on the toilet ceramic body, the fixing frame is sleeved outside the bolt, and the fixing frame has a guide groove; the nut being matched with the bolt; a screw hole of the nut being correspondingly positioned at a lower threading position of the bolt; and the bolt passing through the ceramic body and threadedly connecting to the nut; **characterized in that** the nut extends radially to form an insertion pin, the fastener being gripped on the outer side of the fixing frame and is provided with an insertion hole (3-3) into which the nut is inserted, whereby the nut passes through the insertion hole of the fastener and an opening (2-3) of the fixing frame.

2. The toilet cover plate hinge seat easy to disassemble and assemble according to claim 1, wherein the fixing frame has a limiting portion for cooperating with the fastener (3) to position the fastener in the first state; the fastener has a fastener limiting portion corresponding to a fixing frame limiting portion; the fastener has the first state and a second state; the nut (4) is located in a non-center of gravity position of the fastener and forms a connection relationship of synchronous motion with the fastener; and the fastener moves with the nut, switches to the second state after disengagement of the fastener limiting portion from the fixing frame limiting portion, and can abut a lower end face of a ceramic mounting hole in the second state.

3. The toilet cover plate hinge seat easy to disassemble and assemble according to claim 1 or 2, wherein the fixing frame limiting portion is a lateral protrusion (2-5) provided on a lateral wall of the fixing frame (2); and the fastener limiting portion is a lateral groove (3-5).

4. The toilet cover plate hinge seat easy to disassemble and assemble according to claim 1, wherein the first state is an upright state, and the second state is a horizontal state; the fastener (3) switching between the two states by flipping.

5. The toilet cover plate hinge seat easy to disassemble and assemble according to claim 4, wherein the fastener (3) flips to the horizontal state by means of its dead weight after the fastener limiting portion moves with the nut (4) and disengages from the fixing frame limiting portion (2-5).

6. The toilet cover plate hinge seat easy to disassemble and assemble according to claim 1 or 4, wherein the fastener (3) comprises two side plates (3-1) and a connecting plate (3-2) connecting the two side plates; and the two side plates each are provided with a nut insertion hole (3-3; 3-4) in a non-center of gravity position.

7. The toilet cover plate hinge seat easy to disassemble and assemble according to claim 1, wherein the portion of the fixing frame (2) cooperating with the ceramic body (5) is provided, on the lateral side thereof, with a plurality of protruding ribs (2-2) for supporting the frame in the ceramic mounting hole.

## Patentansprüche

1. Toilettenabdeckplatten-Scharniersitz, der einfach zu demontieren und zu montieren ist, umfassend einen Sitzkörper, Montagebaugruppen zum Befestigen des Sitzkörpers an einem Toilettenkeramikkörper (5), wobei jede der Montagebaugruppen einen Bolzen (1), eine Mutter (4), einen Befestigungsrahmen (2) und ein Befestigungselement (3) umfasst, wobei der Befestigungsrahmen unter oder in einem Stützmontageloch an dem Toilettenkeramikkörper vorgesehen ist, der Befestigungsrahmen außerhalb des Bolzens mit einer Hülse versehen ist und der Befestigungsrahmen eine Führungsnut aufweist; wobei die Mutter mit dem Bolzen zusammenpasst; ein Schraubenloch der Mutter entsprechend an einer unteren Gewindeposition des Bolzens positioniert ist; und der Bolzen durch den Keramikkörper hindurchgeht und mit der Mutter verschraubt ist; **dadurch gekennzeichnet, dass** sich die Mutter radial erstreckt, um einen Einsetzstift zu bilden, wobei das Befestigungselement an der Außenseite des Befestigungsrahmens gegriffen wird und mit einem Einsetzloch (3-3) versehen ist, in das die Mutter eingesetzt wird, wodurch die Mutter durch das Einsetzloch des Befestigungselements und eine Öffnung (2-3) des Befestigungsrahmens hindurchgeht.

2. Toilettenabdeckplatten-Scharniersitz, der einfach zu demontieren und zu montieren ist, nach Anspruch 1, wobei der Befestigungsrahmen einen Begrenzungsabschnitt aufweist, der mit dem Befestigungselement (3) zusammenwirkt, um das Befestigungselement im ersten Zustand zu positionieren; das Befestigungselement einen Befestigungselement-Begrenzungsabschnitt aufweist, der einem Befestigungsrahmen-Begrenzungsabschnitt entspricht; das Befestigungselement den ersten Zustand und einen zweiten Zustand aufweist; die Mutter (4) sich in einer Position außerhalb des Schwerpunkts des Befestigungselements befindet und eine Verbindungsbeziehung mit synchroner Bewegung mit dem Befestigungselement bildet; das Befestigungselement sich mit der Mutter bewegt, in den zweiten Zustand wechselt, nachdem der Begrenzungsabschnitt des Befestigungselements von dem Begrenzungsabschnitt des Befestigungsrahmens gelöst wurde, und in dem zweiten Zustand an einer unteren Endfläche eines Keramikmontagelochs anliegen kann.

3. Toilettenabdeckplatten-Scharniersitz, der einfach zu demontieren und zu montieren ist, nach Anspruch 1 oder 2, wobei der Befestigungsrahmen-Begrenzungsabschnitt ein seitlicher Vorsprung (2-5) ist, der an einer Seitenwand des Befestigungsrahmens (2) ausgebildet ist, und dass der Befestigungselement-Begrenzungsabschnitt eine seitliche Nut (3-5) ist.

4. Toilettenabdeckplatten-Scharniersitz, der einfach zu demontieren und zu montieren ist, nach Anspruch 1, wobei der erste Zustand ein aufrechter Zustand und der zweite Zustand ein horizontaler Zustand ist; wobei das Befestigungselement (3) durch Umklappen zwischen den beiden Zuständen wechselt.

5. Toilettenabdeckplatten-Scharniersitz, der einfach zu demontieren und zu montieren ist, nach Anspruch 4, wobei das Befestigungselement (3) durch sein Eigengewicht in den horizontalen Zustand kippt, nachdem sich der Begrenzungsabschnitt des Befestigungselements mit der Mutter (4) bewegt und sich von dem Begrenzungsabschnitt (2-5) des Befestigungsrahmens löst.

6. Toilettenabdeckplatten-Scharniersitz, der einfach zu demontieren und zu montieren ist, nach Anspruch 1 oder 4, wobei das Befestigungselement (3) zwei seitliche Platten (3-1) und eine die beiden seitlichen Platten verbindende Verbindungsplatte (3-2) umfasst, wobei die beiden seitlichen Platten je mit einem Loch (3-3; 3-4) zum Einsetzen der Mutter in einer nicht-schwerpunktsmäßigen Position versehen sind.

7. Toilettenabdeckplatten-Scharniersitz, der einfach zu demontieren und zu montieren ist, nach Anspruch 1, wobei der mit dem Keramikkörper (5) zusammenwirkende Teil des Befestigungsrahmens (2) an seiner Seite mit einer Vielzahl von vorstehenden Rippen (2-2) zum Abstützen des Befestigungsrahmens im Keramikmontageloch versehen ist.

## Revendications

1. Siège à charnière pour plaque d'abattant de toilettes, facile à démonter et à monter, comprenant un corps de siège, des ensembles de montage pour fixer le corps de siège à un corps en céramique de toilettes (5), chacun des ensembles de montage comprenant un boulon (1), un écrou (4), un cadre de fixation (2) et un élément de fixation (3), le cadre de fixation étant prévu sous ou dans un trou de montage de support sur le corps en céramique de toilettes, le cadre de fixation étant pourvu d'un manchon à l'extérieur du boulon et le cadre de fixation ayant une rainure de guidage; l'écrou étant adapté au boulon; un trou de vis de l'écrou étant positionné de manière correspondante à une position filetée inférieure du boulon; et le boulon passant à travers le corps en céramique et est vissé à l'écrou; **caractérisé en ce que** l'écrou s'étend radialement pour former une broche d'insertion, l'élément de fixation étant saisi à l'extérieur du cadre de fixation et étant pourvu d'un trou d'insertion (3-3) dans lequel l'écrou est inséré, l'écrou passant ainsi à travers le trou d'insertion de l'élément de fixation et une ouverture (2-3) du cadre de fixation.

2. Siège à charnière pour plaque d'abattant de toilettes, facile à démonter et à monter, selon la revendication 1, dans lequel le cadre de fixation comprend une partie de délimitation qui coopère avec l'élément de fixation (3) pour positionner l'élément de fixation dans le premier état; l'élément de fixation comprend une partie de délimitation de l'élément de fixation qui correspond à une partie de délimitation du cadre de fixation; l'élément de fixation présente le premier état et un deuxième état; l'écrou (4) est dans une position hors du centre de gravité de l'élément de fixation et forme une relation de connexion de mouvement synchrone avec l'élément de fixation; l'élément de fixation se déplace avec l'écrou, passe dans le deuxième état après que la partie de délimitation de l'élément de fixation a été désengagée de la partie de délimitation du cadre de fixation, et peut venir en butée contre une surface d'extrémité inférieure d'un trou de montage en céramique dans le deuxième état.

3. Siège à charnière pour plaque d'abattant de toilettes, facile à démonter et à monter, selon la revendication 1 ou 2, dans lequel la partie de délimitation du cadre de fixation est une saillie latérale (2-5) fournie sur une paroi latérale du cadre de fixation (2), et dans lequel la partie de délimitation de l'élément de fixation est une rainure latérale (3-5).

4. Siège à charnière pour plaque d'abattant de toilettes, facile à démonter et à monter, selon la revendication 1, dans lequel le premier état est un état vertical et le deuxième état est un état horizontal; l'élément de fixation (3) passant d'un état à l'autre en basculant.

5. Siège à charnière pour plaque d'abattant de toilettes, facile à démonter et à monter, selon la revendication 4, dans lequel l'élément de fixation (3) bascule à l'état horizontal sous l'effet de son propre poids après que la partie de délimitation de l'élément de fixation s'est déplacée avec l'écrou (4) et s'est désengagée de la partie de délimitation du cadre de fixation (2-5).

6. Siège à charnière de plaque d'abattant de toilettes, facile à démonter et à monter, selon la revendication 1 ou 4, dans lequel l'élément de fixation (3) comprend deux plaques latérales (3-1) et une plaque de liaison (3-2) reliant les deux plaques latérales, les deux plaques latérales étant chacune pourvues d'un trou (3-3; 3-4) pour l'insertion de l'écrou dans une position hors centre de gravité.

7. Siège à charnière pour plaque d'abattant de toilettes, facile à démonter et à monter, selon la revendication 1, dans lequel la partie du cadre de fixation (2) qui coopère avec le corps en céramique (5) est pourvue sur son côté d'une pluralité de nervures en saillie (2-2) pour supporter le cadre de fixation dans le trou de montage en céramique.
